# FASCICULE DE BREVET EUROPEEN

(11) **EP 0 560 884 B1**
(45) Date de publication et mention de la délivrance du brevet: **06.09.1995**
(21) Numéro de dépôt: 92901431.4
(22) Date de dépôt: 27.11.1991
(51) Int. Cl.: H01M 8/04, H01M 8/22, H01M 6/50, H01M 12/04

(54) **DISPOSITIF DE CONVERSION ELECTROCHIMIQUE ET GENERATEUR ELECTROCHIMIQUE A ELECTRODE RECHARGEABLE EN MATERIAU ELECTRO-ACTIF**
ELEKTROCHEMISCHE UMWANDLUNGSVORRICHTUNG UND ELEKTROCHEMISCHER GENERATOR MIT EINER NACHLADBAREN ELEKTRODE AUS ELEKTROAKTIVEM MATERIAL
ELECTROCHEMICAL CONVERSION DEVICE AND ELECTROCHEMICAL GENERATOR WITH RECHARGEABLE ELECTRODE MADE OF ELECTROACTIVE MATERIAL

(30) Priorité: 27.11.1990 FR 9014797
(43) Date de publication de la demande: 22.09.1993
(73) Titulaire: SORAPEC Société de Recherches et d'Applications Electrochimiques, F-94124 Fontenay-sous-BoisCédex (FR)
(72) Inventeur: BRONOEL, Guy, F-78000 Versailles (FR); MILLOT, Alain, F-77200 Torcy (FR); TASSIN, Noelle, F-94120 Fontenay-sous-Bois (FR)
(74) Mandataire: Stalla-Bourdillon, Bernard
(86) Numéro de dépôt international: FR9100944
(87) Numéro de publication internationale: WO9210008

(56) Documents cités:
- EP-A- 0 371 883
- DE-A- 2 717 753
- FR-A- 354 021
- FR-A- 2 663 162
- GB-A- 110 396
- US-A- 4 198 475
- WO A 802344

## Description

La présente invention vise l'amélioration de la conception et des conditions de fonctionnement des générateurs ou accumulateurs électrochimiques tels que ceux que l'on peut destiner à l'alimentation énergétique des moteurs de véhicules.

D'une manière générale, pour cette application comme pour d'autres applications industrielles analogues, on cherche notamment à pouvoir régénérer l'accumulateur fréquemment entre des périodes de fonctionnement en décharge électrique, qui peuvent être nombreuses et plus ou moins brèves, sans que l'on soit obligé pour autant de le démonter. C'est d'ailleurs dans ce même contexte que l'on apprécie vivement les particularités des électrodes rechargeables mécaniquement en matériau électro-actif consommable auxquelles l'invention s'intéresse plus particulièrement.

Plus précisément, pour améliorer la conception et les conditions de fonctionnement de générateurs électrochimiques, l'invention propose de rendre automatique la recharge en matériau électro-actif consommable d'une électrode rechargeable. Elle concerne de ce fait un procédé de commande de l'alimentation en matériau actif d'une électrode rechargeable de générateur ou accumulateur électrochimique, ainsi qu'un dispositif permettant la mise en oeuvre de ce procédé et un générateur électrochimique à électrode rechargeable comportant un tel dispositif.

Elle s'applique plus particulièrement aux générateurs électrochimiques qui comportent deux systèmes d'électrodes en contact avec un électrolyte, l'un desdits systèmes étant constitué pour sa partie active par des particules métalliques consommables en un matériau électro-actif, comme par exemple un générateur électrochimique du type de celui décrit dans la demande de brevet français de la demanderesse n° 88 15703.

Selon sa caractéristique principale, la présente invention concerne un procédé de conversion électrochimique utilisant un générateur électrochimique à électrode rechargeable en matériau électro-actif consommable, sous forme solide divisée, prélevé dans un réservoir associé audit générateur pour alimenter une pochette limitant ladite électrode, caractérisé en ce qu'il consiste à commander l'alimentation de ladite pochette en matériau électro-actif en fonction d'une variation de potentiel décelée localement dans ladite pochette.

Un tel procédé vise donc à maintenir automatiquement le remplissage de la pochette tel que les caractéristiques du générateur restent pratiquement inchangées à un niveau optimal, ce qu'il réalise en faisant intervenir la différence de potentiel existant en fonctionnement entre l'électrode active et l'électrolyte.

Selon une caractéristique du procédé suivant l'invention, la variation de potentiel est décelée en mesurant la différence de potentiel apparaissant en fonctionnement entre deux sondes dont une première est placée dans ladite pochette et dont une seconde est en permanence en contact avec un électrolyte dans lequel baigne ladite électrode ; et les particules solides de matériau électro-actif consommable contenues dans ledit réservoir y sont tassées par gravité. Une bonne mesure de la différence de potentiel est obtenue lorsque de préférence, les sondes sont l'une à côté de l'autre et donc insérées l'une et l'autre dans la pochette. La seconde sonde, en permanence en contact avec l'électrolyte est alors revêtue d'une gaine isolante percée de trous ou d'une paroi poreuse, afin d'éviter que la sonde soit en contact avec le matériau électro-actif. La gaine isolante pourra être avantageusement en PVC.

La variation de potentiel ainsi décelée permet d'effectuer une détection de niveau de particules solides contenues dans la pochette. En effet, dès que la première sonde placée dans la pochette n'est plus en contact avec des particules de matériau électro-actif, on observe une variation de potentiel entre les deux sondes. Cela permet de détecter l'instant où l'électrode a besoin d'être rechargée en matériaux électro-actifs. Les systèmes. de détection du niveau de remplissage de l'électrode précedemment utilisés mesurent le potentiel de sortie de l'électrode et dépendent de la température du système ainsi que de la densité de courant qui le traverse. Ce sont donc des indicateurs de fonctionnement du générateur alors que le système de détection de l'invention est un indicateur direct du niveau de matériau électro-actif.

Le positionnement de la première sonde dans la pochette par rapport au fond de cette dernière définit le niveau à partir duquel l'électrode doit être rechargée pour que les caractéristiques du générateur restent inchangées. De préférence, cette sonde se situe aux 2/3 de la hauteur d'une électrode à aluminium. Ce positionnement est ajustable en fonction du type d'électrode utilisé.

Un autre but de l'invention est de proposer la réalisation d'un générateur électrochimique à électrode rechargeable comportant des moyens propres à mettre en oeuvre le procédé selon l'invention.

Avantageusement, le réservoir de matériau électro-actif que comporte le générateur, comprend un sas intermédiaire séparant un volume supérieur dudit réservoir de moyens d'alimentation en matériau électro-actif de l'électrode.

L'utilisation d'un volume ou sas intermédiaire permet de fixer la dose de particules de matériau électro-actif à déverser dans l'électrode rechargeable pour permettre à celle-ci de retrouver un niveau de charge adéquat en particules consommables, ledit volume jouant ainsi le rôle d'un sas d'alimentation par une dose prédéterminée de matériau électro-actif pour le générateur électrochimique. Il permet en outre d'éviter que le matériau remplissant le volume supérieur du réservoir soit souillé par un aérosol provenant de l'électrolyte.

De plus, cela permet de préparer une dose unitaire de particules à déverser dans la pochette et par ce biais d'éviter que le niveau de remplissage de la pochette atteigne le niveau de l'électrolyte.

En outre, la constitution du sas selon l'invention permet de modifier le volume de cette dose unitaire sans intervenir sur le volume du sas, la dose unitaire étant fixée par les temps d'ouverture des moyens de transfert.

Le générateur comporte avantageusement des moyens de transfert de particules de matériau électro-actif depuis ledit volume supérieur vers ledit sas intermédiaire.

Un autre but de la présente invention est de proposer un procédé de commande de l'alimentation en matériau électro-actif d'une électrode rechargeable pour un générateur électrochimique selon l'invention.

Le procédé de commande selon l'invention comporte avantageusement les étapes suivantes consistant :
- à mesurer la différence de potentiel entre lesdites première et seconde sondes ;
- à déclencher l'ouverture de moyens d'alimentation en matériau électro-actif de ladite électrode dès que ladite différence de potentiel devient inférieure à un seuil minimal prédéterminé ;
- à déclencher la fermeture desdits moyens d'alimentation dès que ladite différence de potentiel devient supérieure à un seuil maximal prédéterminé.

Selon une caractéristique particulièrement avantageuse du procédé de commande selon l'invention, celui-ci consiste simultanément à déclencher l'ouverture desdits moyens d'alimentation et à actionner des moyens de temporisation de l'ouverture desdits moyens de transfert, lesdits moyens de temporisation déclenchant l'ouverture desdits moyens de transfert à l'éxpiration d'un premier intervalle de temps prédéterminé, supérieur à l'intervalle de temps nécessaire pour déverser le contenu dudit sas intermédiaire dans ladite électrode, et déclenchant la fermeture desdits moyens de transfert au bout d'un second intervalle de temps prédéterminé, permettant le remplissage dudit sas intermédiaire par déversement d'une partie du contenu du réservoir. Selon une variante de réalisation, la fermeture desdits moyens de transfert est déclenchée par une détection de niveau de remplissage dudit sas intermédiaire.

Le matériau électro-actif utilisé selon l'invention est constitué de préférence de billes ou de granules ou de petits cylindres obtenus par découpe de fils.

Avantageusement, le générateur électrochimique selon l'invention comporte des moyens de mesure de la différence de potentiel entre lesdites première et seconde sondes, et une unité logique de commande comprenant d'une part des moyens de comparaison de ladite différence de potentiel par rapport à un seuil minimal et un seuil maximal prédéterminé, et d'autre part, des moyens de commande des moyens d'alimentation de ladite électrode en matériau électro-actif.

Les moyens de mesure comportent avantageusement une première sonde électrique placée dans la pochette limitant l'électrode rechargeable et reliée par un premier conducteur électrique isolé à ladite unité logique de commande, et une seconde sonde électrique en contact permanent avec l'électrolyte, placée de préference elle aussi dans la pochette et reliée par un deuxième conducteur électrique isolé à ladite unité logique de commande.

Cette unité logique de commande comporte avantageusement un comparateur de tension et un relais de commande déclenché par ce comparateur.

Dans l'application à un générateur électrochimique comprenant un volume intermédiaire d'alimentation, ou sas, le dispositif comporte de préférence des moyens de temporisation de l'ouverture desdits moyens de transfert du sas intermédiaire, lesdits moyens de temporisation étant déclenchés par ladite unité logique de commande.

Ces moyens de temporisation peuvent être dimensionnés de sorte à permettre l'ouverture des moyens de transfert une fois fermés les moyens d'alimentation et de sorte à permettre la fermeture desdits moyens de transfert au bout d'un second intervalle de temps correspondant au temps nécessaire au remplissage dudit sas intermédiaire.

La présente invention a encore pour objet de fournir les moyens de transfert et d'alimentation propres à mettre en oeuvre le procédé de l'invention dans un générateur électrochimique selon l'invention. A cet effet, le générateur selon l'invention se caractérise en ce qu'il comporte au moins un premier organe obturateur, notamment du type boisseau ou glissière, propre à permettre périodiquement la mise en communication d'une structure collectrice de ladite électrode avec le réservoir de particules électro-actives devant alimenter ladite structure. Ce premier organe obturateur constitue les moyens d'alimentation.

De manière particulièrement avantageuse, le générateur comporte un second obturateur, notamment du type boisseau ou glissière, propre à permettre périodiquement la mise en communication du sas intermédiaire avec ledit volume supérieur du réservoir, le sas intermédiaire étant ainsi limité par lesdits premier et second obturateurs.

Le sas intermédiaire est avantageusement dimensionné de sorte à correspondre à un volume déterminé de particules pouvant être contenues dans la pochette, entre un niveau maximum haut correspondant à une différence de potentiel équivalant au second seuil maximal prédéterminé, et un niveau critique bas correspondant à une différence de potentiel équivalent au premier seuil minimal prédéterminé.

Ledit premier obturateur est avantageusement constitué par un boisseau cylindrique dans lequel sont ménagés diamétralement des trous permettant le passage desdites particules électro-actives, les trous ayant de préférence une section allongée dans l'axe du boisseau.

Cette forme de trou à section allongée, créant en quelque sorte des fentes, convient particulièrement pour un générateur électrochimique dans lequel l'électrode rechargeable est définie par une pochette de réception des particules de matériau électro-actif, notamment dans les cas où une telle pochette ménage en elle-même des canaux définissant des zones actives propres à être remplies en matériau électro-actif, qu sont séparées les unes des autres par des zones inactives fermées à la réception des particules.

Afin de permettre un bon déversement des particules, de préférence, la largeur des fentes est égale à la largeur du volume supérieur et du sas dans leurs parties immédiatement en aval ou en amont de l'obturateur. De plus, les arêtes des fentes sont avantageusement en une matière souple de façon à éviter un coïncement des particules.

De manière à permettre un bon déversement des particules de matériau électro-actif dans le sas intermédiaire, le volume supérieur du réservoir présente avantageusement, perpendiculairement à l'axe des moyens de transfert, une section décroissante en marche d'escalier au fur et à mesure qu'elle est proche desdits moyens de transfert.

Selon un mode de réalisation préféré de l'invention, lesdits moyens de transfert comportent avantageusement deux cylindres parallèles distants l'un de l'autre d'un écartement légèrement inférieur à la taille des particules solides contenues dans le réservoir et propres à être mus en rotation autour de leur axe respectif de sorte à entraîner les particules solides vers ledit sas intermédiaire.

Avantageusement, lesdits cylindres comportent sur leur périphérie une épaisseur en un matériau souple propre à être légèrement écrasé élastiquement au passage de particules et permettant d'éviter tous risques de blocages du mécanisme qui pourraient intervenir en raison de la forme des particules, notamment lorsque celles-ci ne sont pas parfaitement sphériques.

Lesdits cylindres permettent un écoulement régulier des particules de matériau électro-actif du réservoir vers le sas intermédiaire malgré une grande hauteur de particules dans le réservoir.

Comme on l'a déjà indiqué, l'invention se prête particulièrement bien et non exclusivement à une application dans des accumulateurs où l'électrode rechargeable en particules de matériau électro-actif est délimitée et constituée par une pochette à structure alvéolaire.

On désigne notamment par là dans cette technique, des structures tridimensionnelles formées à partir de mousse de matière organique à haute porosité en pores ouverts, qui sont revêtues en leur sein d'un métal tapissant leurs pores. En général la matière organique de départ est détruite par combustion en fin de fabrication ou lors de la première utilisation, de sorte que l'on réalise ainsi des supports d'électrode entièrement métalliques, extrêmement légers et présentant une grande surface spécifique. Dans l'accumulateur à électrode rechargeable, ce support reçoit les particules de matière active dans ses pores, et il joue le rôle d'un collecteur de courant unique sur toute la surface d'électrode destinée à participer au processus électrochimique, en coopération avec la surface correspondante d'une électrode de polarité opposée, qui généralement, présente au contraire une surface active plane en regard.

D'où l'intérêt que l'on peut avoir à fermer certaines parties de telles électrodes, ne serait-ce par exemple qu'en comprimant la structure alvéolaire pour réduire la dimension des pores de manière que les particules de matière active ne puissent plus y pénétrer. C'est ainsi que l'on définit des canaux de zones actives et des zones inactives intercalaires. Dans ce mode de réalisation, les faces opposées de la pochette peuvent être réalisées en des matériaux non conducteurs.

Des canaux similaires peuvent également être ménagés en dehors de toute structure alvéolaire.

La pochette peut alors comporter des faces opposées planes et parallèles, délimitant la pochette de l'électrode, et réalisées en tout matériau perméable à l'électrolyte et conducteur électrique pour collecter le courant produit, auquel cas elle peut comporter des parois intermédiaires internes, fermées ou non, séparant les canaux récepteurs des particules de matière active. De préférence, ces parois internes sont elles-mêmes en matériau conducteur et en liaison électriquement conductrice avec les faces opposées de la pochette, et elles peuvent avantageusement se laisser traverser par l'électrolyte. Avec de telles faces conductrices, les canaux peuvent aussi être définis directement par ces faces, conformées rigidement de manière appropriée et soudées l'une à l'autre, par endroits, le long des zones inactives, préférentiellement sur le plan médian de la pochette.

Dans des modes de réalisation préférés, le pas de répétition des zones actives et inactives est inférieur à 4 fois la largeur des canaux définissant les zones actives ou, au plus, égal à cette valeur. Il est également favorable que chaque zone inactive joignant 2 zones actives occupées par des canaux présente parallèlement à 2 faces opposées de la pochette (qui, dans un générateur, sont parallèles à la surface de l'électrode positive ) une largeur au moins égale à 1,5 fois et au plus égale à 5 fois la distance qui, dans le générateur, sépare les zones de la surface de l'électrode positive en vis à vis et que cette largeur des zones inactives soit au moins égal ou supérieure au diamètre d'une particule de matériau électro-actif et de préférence égale ou supérieure à 2 ou 3 fois ce diamètre.

Par ailleurs, il est dans ce cas particulièrement avantageux pour un bon fonctionnement d'une telle électrode, que la pochette dans son ensemble, ou les canaux constituant des zones actives, soient dimensionnés en épaisseur de sorte à pouvoir recevoir initialement entre une et trois particules de matériau électro-actif, ces particules ayant généralement une dimension comprise entre un et cinq millimètres.

En effet, l'expérience a montré que dans le cas où un plus grand nombre de particules se plaçaient dans l'épaisseur de la pochette, celles situées au centre participaient très peu ou pas du tout à la réaction anodique recherchée, alors qu'elles étaient néanmoins le siège de phénomènes de corrosion.

Selon l'invention, lorsque l'électrode rechargeable est une pochette à canaux, deux sondes sont placées dans chaque canal ou zone active. Les mesures de potentiel indiquant le niveau de remplissage sont alors individuelles pour chaque canal. L'unité logique de commande comprenant les moyens de comparaison desdites mesures de potentiel commande les moyens d'alimentation par rapport à un seuil minimal et un seuil maximal prédéterminés.

Dans un mode de réalisation de ce générateur électrochimique l'unité logique de commande ne déclenche pas les moyens d'alimentation tant qu'un des canaux indiquera un niveau de remplissage en matériau électro-actif correspondant au seuil maximal.

Dans une autre variante de réalisation on a un troisième seuil prédéterminé correspondant à un niveau critique du matériau actif dans un canal qui, lorsqu'il est atteint dans un des canaux, déclenche automatiquement les moyens d'alimentation. Naturellement, l'invention n'est en rien limitée à ces modes de réalisation.

Selon l'invention, le générateur électrochimique peut comporter plusieurs cellules électrolytiques.

Dans ce mode de réalisation, il est avantageux de concevoir un réservoir unique qui comporte plusieurs moyens de transfert et d'alimentation tels que décrits précédemment et propres à être commander individuellement par rapport aux mesures de potentiel décelées dans chacune des électrodes rechargeables de la façon décrite auparavant.

On décrira maintenant plus en détails un mode de réalisation particulier de l'invention qui en fera mieux comprendre les caractéristiques essentielles et les avantages, étant entendu toutefois que la forme de réalisation des matériels décrits et les conditions de mise en oeuvre du procédé sont choisies à titre d'exemple et qu'elles ne sauraient être limitatives de la portée de l'invention. Cette description est illustrée par les dessins annexés, dans lesquels :
- la figure 1 représente une vue en coupe d'un générateur électrochimique selon l'invention dans lequel les moyens d'alimentation de l'électrode rechargeable et les moyens de transfert sont constitués par des obturateurs à glissière ;
- la figure 2 représente, en perspective éclatée, un générateur électrochimique selon l'invention, dans lequel les moyens d'alimentation de l'électrode rechargeable et les moyens de transfert sont constitués par des obturateurs à boisseau cylindrique ;
- et la figure 3 représente en coupe transversale le générateur électrochimique représenté à la figure 2, dans lequel les moyens d'alimentation sont constitués par un obturateur à boisseau cylindrique et les moyens de transfert sont constitués par deux cylindres parallèles.

La figure 4 représente un générateur électrochimique selon l'invention comportant plusieurs cellules électrolytiques dont une est représentée en vue éclatée.

Sur ces figures, les mêmes éléments seront désignés par les mêmes références et sur la première, on a représenté schématiquement les moyens de commandes selon l'invention.

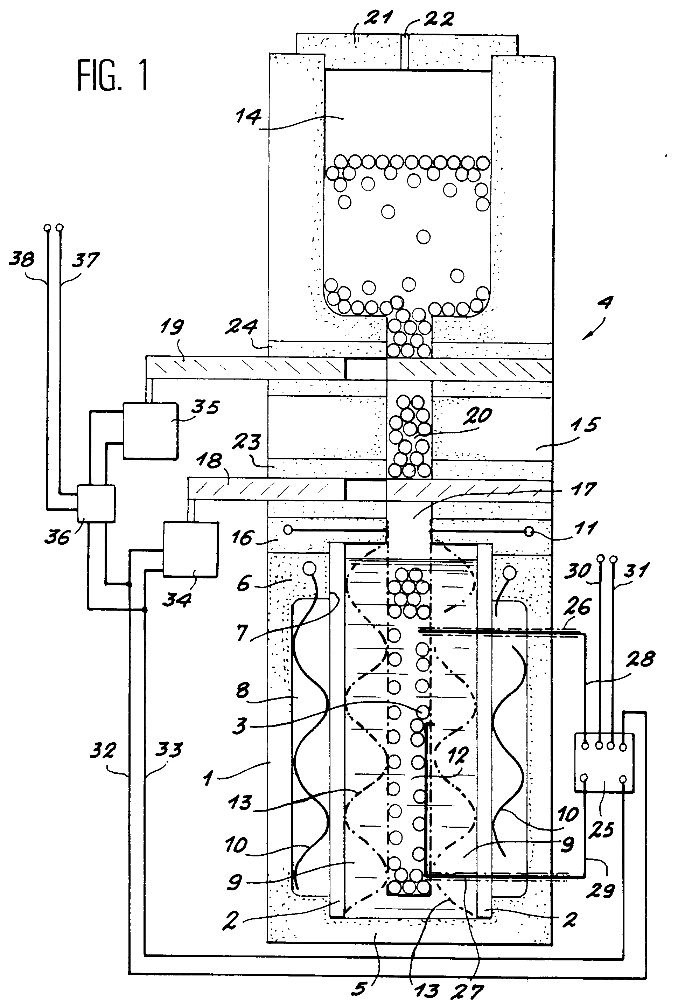

Le générateur électrochimique représenté à la figure 1 comporte une cellule électrolytique unique, alors que dans la pratique industrielle, il comportera plus souvent une série de cellules.

On voit ainsi sur la figure, une cuve électrolytique 1, dans laquelle sont disposées deux électrodes à air 2, de part et d'autre d'une électrode négative de type mécaniquement rechargeable en particules 3 d'aluminium grâce à un système de recharge 4. Les trois électrodes baignent dans un électrolyte 9 contenu dans la cuve 1. L'électrode d'aluminium est disposée suivant l'axe de la cuve 1. La cuve 1 est fermée par un fond 5 et par une paroi supérieure 6 comportant une ouverture centrale 7. Les électrodes à air du générateur sont de type classique à triple contact. Elles sont exposées à l'air 8 sur leur face externe et leur face interne est en contact avec l'électrolyte 9. Elles peuvent également être alimentées en air enrichi en oxygène et constituer des électrodes à oxygène.

Un collecteur de courant positif 10 est disposé entre la face externe des électrodes 2 et la paroi de la cuve 1. Les électrodes négatives sont reliées à un circuit de collecte 11. Les particules 3 sont disposées dans une pochette axiale 12, disposée perpendiculairement au plan de la figure dans la zone médiane de la cuve, entre les électrodes. Un espaceur isolant 13 est disposé entre la pochette 12 et la face interne des électrodes à air 2. Le principe de fonctionnement de ce générateur électrochimique, pour ce qui est de la génération électrochimique proprement dite, ne sera pas détaillé ici. Pour le fonctionnement d'un générateur de ce type, on pourra par exemple se reporter à la demande de brevet déposée sous le numéro 88 15703.

Le dispositif 4 d'approvisionnement en particules solides consommables 3 est constitué par un réservoir 14 dont le fond 15 repose sur une plaque 16.

Cette plaque 16 est fixée en couvercle sur la paroi supérieure 6 de la cuve 1 et comporte une ouverture 17 se situant dans le prolongement de la pochette 12. Le réservoir 14 est solidaire du fond 15 par interposition d'un premier obturateur 18 constituant les moyens d'alimentation en matériau électro-actif de l'électrode rechargeable. Le dispositif comporte également un second obturateur 19 constituant les moyens de transfert en matériau actif d'un sas intermédiaire 20 entre un volume supérieur du réservoir 14 et la pochette 12. Le réservoir 14 est fermé par un capuchon 21 que l'on peut retirer chaque fois que le réservoir est vide afin de remplir celui-ci à nouveau. Le capuchon 21 est percé d'un orifice 22 qui assure un équilibrage de pression entre l'intérieur du réservoir et l'extérieur.

Dans la forme de réalisation représentée à la figure 1, les deux obturateurs 18 et 19 sont des obturateurs de type à glissière. Un mouvement de translation de ces obturateurs dans leurs glissières respectives 23 et 24 assure respectivement la mise en communication du sas intermédiaire 20 avec l'intérieur de la pochette 12 et celle du volume supérieur du réservoir 14 avec le sas intermédiaire 20.

Le dispositif de commande de l'alimentation en matériau électro-actif, donc en particules 3 de l'électrode rechargeable comporte une unité logique de commande 25 comprenant un comparateur de tension et un relais. Le comparateur de tension constitue des moyens de comparaison de la différence de potentiel définie par une première sonde électrique 26 placée dans la pochette 12, et une seconde sonde électrique 27, plongeant elle dans l'électrolyte 9, placée de préférence elle aussi dans la pochette. Afin d'être parfaitement immobile dans la pochette la seconde sonde 27 se présente sous la forme d'un fil entrant et sortant de la pochette. Les sondes 26 et 27 définissent donc une différence de potentiel aux bornes du comparateur de tension de l'unité logique de commande 25, en étant reliées à cette unité, chacune par un conducteur électrique isolé, respectivement 28 et 29.

Cette différence de potentiel est destinée à être comparée avec un seuil minimal et un seuil maximal tous deux prédéterminés dans ladite unité logique de commande 25, de sorte à déclencher le relais de cette unité de fonction de la comparaison.

Les bornes de sortie du relais permettent de transférer l'alimentation arrivant à l'unité logique de commande 25 par l'intermédiaire de deux conducteurs 30 et 31 à des moyens de commande des obturateurs 18 et 19 par l'intermédiaire de conducteurs électriques 32 et 33. Ces moyens de commande des obturateurs 18 et 19 sont constitués dans cette forme de réalisation par des électro-aimants 34 et 35, ayant pour objet de faire coulisser les obturateurs dans leurs glissières respectives, lorsque les électroaimants sont activés.

A cet effet, l'électro-aimant 34 est relié directement à l'unité logique de commande 25 de sorte à ouvrir l'obturateur 18 dès que la différence de potentiel au bord des sondes 26 et 27 devient inférieure à un seuil minimal prédéterminé, afin de déverser les particules 3 contenues dans le sas intermédiaire 20 dans la pochette 12.

Le second électro-aimant 35 est quant à lui relié aux conducteurs 32 et 33 par l'intermédiaire de moyens de temporisation 36 constitués, par exemple, par une horloge-relais qui après un intervalle de temps prédéterminé nécessaire au remplissage de la pochette 12 par le sas intermédiaire 20, actionnera l'électro-aimant 35, provoquant alors l'ouverture de l'obturateur 19 et le remplissage du sas intermédiaire 20 par déversement à partir du volume supérieur du réservoir 14 d'une certaine quantité de particules 3. Cet intervalle de temps prédéterminé est de préférence dimensionné de sorte à être légèrement supérieur à l'intervalle de temps nécessaire au déversement du sas intermédiaire 20 dans la pochette 12 de sorte à permettre que l'obturateur 18 soit fermé avant l'ouverture de l'obturateur 19 par désactivation de l'électro-aimant 34 suite à l'ouverture du relais de l'unité logique de commande 25 en raison de l'élévation de la différence de potentiel aux bornes des sondes 26 et 27 jusqu'à atteindre le seuil maximal prédéterminé.

Il est en effet important que le niveau de remplissage de la pochette ne dépasse pas le niveau de l'électrolyte.

Lors de l'ouverture du relais de l'unité 25, l'électro-aimant 35 n'est pas pour autant désactivé, grâce à l'alimentation séparée 37-38 dont bénéficie l'horloge-relais 36 qui, après un second intervalle de temps nécessaire au remplissage du sas intermédiaire 20, provoque la fermeture de l'obturateur 19.

On peut également remplacer les électro-aimants 34 et 35 par des moteurs. Dans ce cas, on place un réducteur sur chaque moteur en prise sur l'extrémité sortante de chaque obturateur 18 ou 19.

Un tel dispositif de commande peut s'adapter quelque soit le type de l'électrode rechargeable. Il suffit pour cela d'adapter le type d'obturateur à l'électrode prévue et de dimensionner les différents seuils de tension et les différents intervalles de temps en fonction des caractéristiques désirées.

Par ailleurs, la position de la sonde 26 dans la pochette 12 détermine le niveau minimum de particules que doit contenir la pochette pour que les caractéristiques du générateur restent pratiquement inchangées.

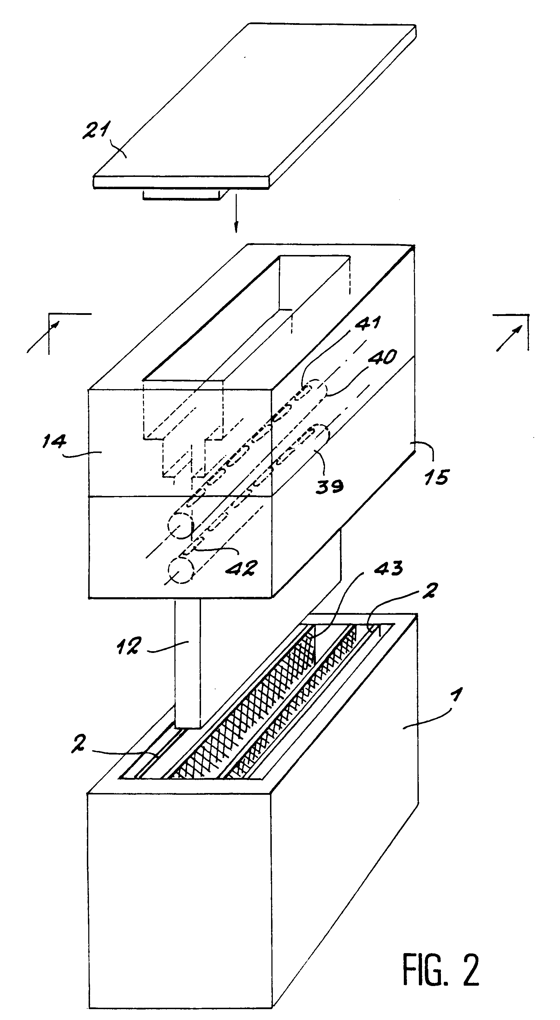

Afin de permettre une bonne descente des particules 3 dans le réservoir 14 et un remplissage optimal du sas intermédiaire 20, le réservoir 14 présente une section décroissante en marche d'escalier au fur et à mesure que chaque particule s'approche de l'obturateur 19, comme on le voit sur la figure 2.

Cette figure représente une vue en perspective éclatée d'un générateur électro-chimique selon l'invention, les mêmes références ayant été utilisées pour désigner les éléments communs avec la figure 1. Le dispositif de commande n'y a pas été représenté pour des raisons de clarté.

La forme de réalisation représentée à cette figure comporte comme obturateur des boisseaux cylindriques, respectivement 39 et 40 qui mettent en communication l'électrode rechargeable avec le sas intermédiaire, ou ce dernier avec le réservoir, non plus par translation dans une glissière mais par rotation du boisseau de sorte à orienter verticalement des orifices traversant 41 dont ils sont munis.

Les moyens de commandes des obturateurs sont dans ce cas de préférence constitués par des moteurs propres à entraîner en rotation les boisseaux.

Dans un mode de réalisation particulier, les orifices du boisseau 39 constituant les moyens d'alimentation ont une forme de fente 42 allongée parallèlement à l'axe du boisseau de sorte à permettre une répartition des particules plus régulière dans la pochette.

Cette forme de réalisation convient plus particulièrement dans le cas d'électrodes à pochette à structure alvéolaire réceptrice de particules de matière électro-active, où la pochette ménage en elle-même des canaux de zones actives propres à être remplis en particules, séparés les uns des autres par dés zones inactives. Il en est de même pour une pochette à canaux en dehors de toute structure alvéolaire.

La figure 2 montre dans la partie supérieure de la cuve 1, un séparateur 43 séparant la pochette 12 des électrodes à air.

Dans le cas d'une électrode à pochette, on a montré que de bons résultats ont été atteints avec un dimensionnement de l'épaisseur des canaux de zones actives permettant de limiter à 3, au plus, le nombre de particules se trouvant à même niveau dans l'épaisseur, de sorte à éviter la corrosion des particules situées au centre de l'empilement, et celles-ci étant mouillées par l'électrolyte en ne participant que peu à la réaction électrochimique de génération du courant.

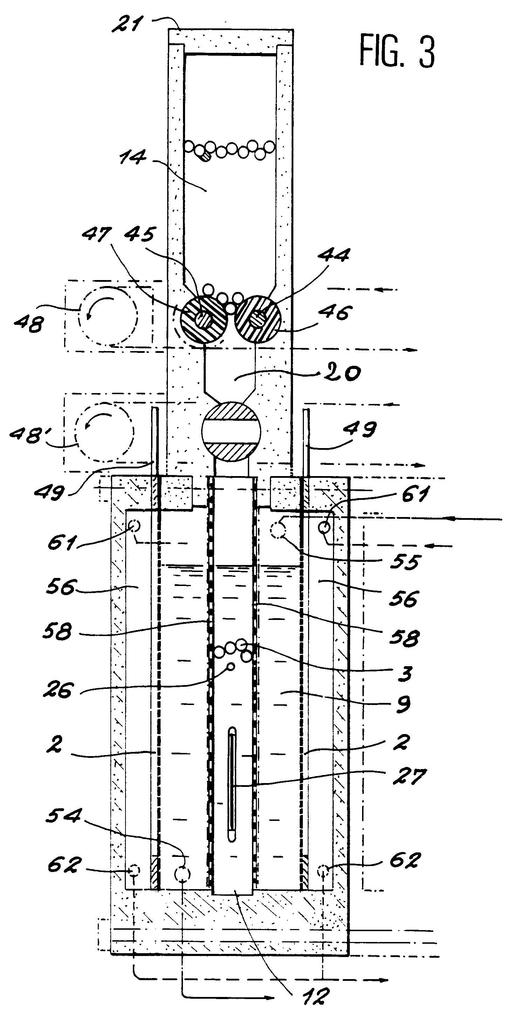

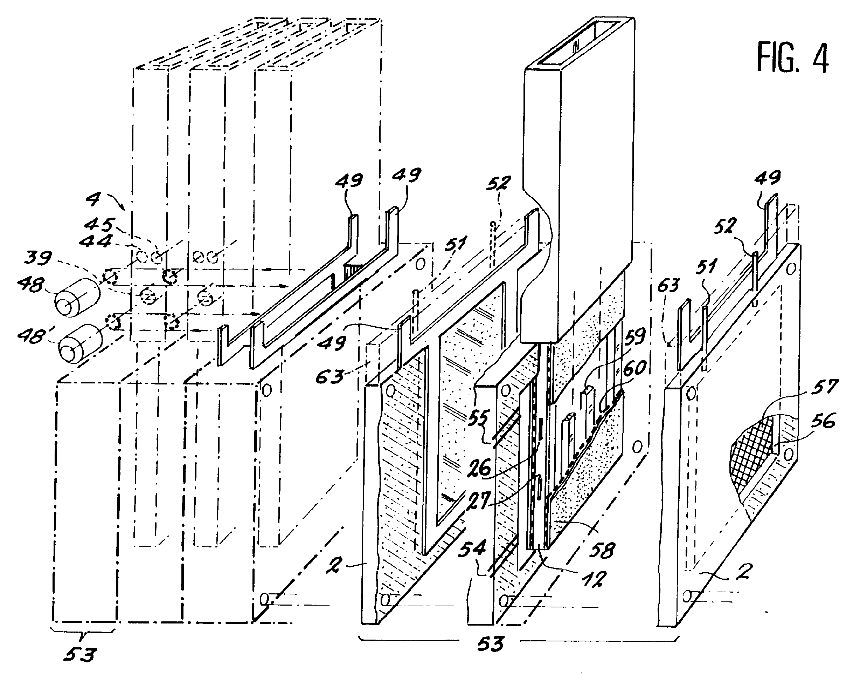

La figure 3 représente en coupe transversale le génerateur électrochimique représenté dans la figure 2 et dans un mode de réalisation préféré des moyens de transfert des particules depuis le volume supérieur du réservoir 14 vers le sas intermédiaire 20 et la figure 4 représente en vue partiellement éclatée, un générateur électrochimique comportant plusieurs cellules électrolytiques 53 du type de celle représentée à la figure 3. Cette variante des moyens de transfert représentée en figure 3 est constituée de deux cylindres 44 et 45 parallèles entre eux et distants d'un écartement dimensionné de sorte à être légèrement inférieur à la taille des particules. Les cylindres 44 et 45 sont revêtus d'une couche de caoutchouc 46, 47 propre à s'écraser légèrement lorsque les particules sont entraînées par rotation des cylindres vers le sas intermédiaire 20. La rotation des cylindres 44 et 45 dans le sens des flèches indiquées à la figure peut être obtenue par un moteur associé à un système d'engrenage situé en bout des axes des cylindres 48 ou tout autre moyen . Les moyens d'alimentation sont constitués d'un boisseau cylindrique 39, sa rotation est obtenue par un moteur associé a un système d'engrenage situé en bout de l'axe du boisseau 48' ou tout autre moyen.

Le dispositif d'approvisionnement 4 est propre à chaque cellule électrolytique 53. Dans une variante de réalisation le dispositif de recharge 4 peut comporter un réservoir unique et des moyens de transfert et d'alimentation pour chaque cellule électrolytique.

Les moyens de commande des obturateurs 44, 45 et 39 sont constitués par des moteurs propres à entraîner par chaîne la rotation de ceux-là.

La cellule électrolytique 53 comporte 2 électrodes à air 2 placées de part et d'autre de la pochette 12. Elles sont exposées à l'air contenu dans une cavité à air 56, par leur face externe 57.

Dans la forme de réalisation représentée à la figure 4 l'air provenant d'un compresseur y est introduit par une conduite d'amenée d'air 51 et en sort par une conduite de sortie d'air 52 toutes deux situées dans la partie supérieure de la cuve.

La représentation de la figure 3 montre les entrée et sortie d'air une variante de circulation où l'air est introduit par une conduite d'amenée 61 en partie supérieure de la cavité à air et sort de cette cavité en partie inférieure par une conduite de sortie 62.

L'électrolyte est introduit dans la cuve électrolytique par une conduite d'amenée 55 et en sort par une conduite de sortie 54.

Les particules de matériau électro-actif sont maintenues dans la pochette 12 par la surface filtre 58 constituée de 2 grillages 60 et de 2 filtres montés de part et d'autre des espaceurs 59.

Un collecteur de courant positif 49 est disposé entre la face externe de chaque électrode à air 2 et la cavité à air 56.

La pochette 12 est associée aux électrodes air par des plaquettes de liaisons 63.

## Revendications

1. Procédé de conversion électrochimique utilisant un générateur électrochimique à électrode rechargeable en matériau électro-actif consommable, sous forme solide divisée, prélevé dans un réservoir (14) associé audit générateur pour alimenter une pochette (12) limitant ladite électrode, suivant lequel on commande l'alimentation de ladite pochette (12) en matériau électro-actif en fonction d'une détection de variation de potentiel, caractérisé en ce que ladite variation de potentiel est décelée localement à l'intérieur de ladite pochette (12) en mesurant la différence de potentiel apparaissant en fonctionnement entre deux sondes (26,27) dont au moins une première est placée dans ladite pochette (12) à proximité immédiate du matériau électro-actif et dont une seconde est en permanence en contact avec un électrolyte (9) dans lequel baigne ladite électrode, et non en contact avec le matériau électro-actif.

2. Procédé de conversion électrochimique selon la revendication 1, caractérisé en ce que la seconde sonde est placée elle aussi dans la pochette, de préférence à côté de la première, et en ce qu'elle est revêtue soit d'une gaine isolante percée de trous, de préférence en PVC, soit d'une paroi microporeuse.

3. Procédé de conversion électrochimique selon les revendications 1 ou 2, caractérisé en ce que les particules solides de matériau électro-actif consommable contenues dans ledit réservoir (14) y sont tassées par gravité.

4. Procédé de conversion électrochimique selon l'une quelconque des revendications 1 à 3, caractérisé en ce que ledit matériau électro-actif est constitué de particules, granules ou cylindres.

5. Générateur électrochimique à électrode rechargeable en matériau électro-actif consommable, caractérisé en ce qu'il comporte des moyens d'alimentation d'une pochette (12) limitant ladite électrode dans le générateur, en matériau électro-actif prélevé dans un réservoir (14) associé au générateur, des moyens de mesure d'une différence de potentiel apparaissant entre une première sonde placée dans ladite pochette (12) et une deuxième sonde positionnée en permanence en contact avec un électrolyte (9) dans lequel baigne ladite électrode, sans être en contact avec le matériau électro-actif, et des moyens de commande desdits moyens d'alimentation pour déclencher automatiquement lesdits moyens d'alimentation en fonction d'une variation de la différence de potentiel décelée par lesdits moyens de mesure.

6. Générateur électrochimique selon la revendication 5, caractérisé en ce que ledit réservoir (14) de matériau électro-actif consommable comporte un sas intermédiaire (20) séparant un volume supérieur dudit réservoir (14) des moyens d'alimentation en matériau électro-actif de ladite électrode.

7. Générateur électrochimique selon la revendication 6, caractérisé en ce qu'il comporte des moyens de transfert de particules de matériau électro-actif depuis ledit volume supérieur vers ledit sas intermédiaire (20).

8. Procédé de commande de l'alimentation en matériau électro-actif d'une électrode rechargeable pour un générateur électrochimique selon l'une quelconque des revendications 5 à 7, caractérisé en ce qu'il comporte les étapes suivantes consistant :
- à mesurer la différence de potentiel entre lesdites première et seconde sondes (26,27) ;
- à déclencher l'ouverture de moyens d'alimentation en matériau électro-actif de ladite électrode dès que ladite différence de potentiel devient inférieure à un seuil minimal prédéterminé ;
- à déclencher la fermeture desdits moyens d'alimentation dès que ladite différence de potentiel devient supérieure à un seuil maximal prédéterminé.

9. Procédé de commande selon la revendication 8, caractérisé en ce qu'il comporte les étapes suivantes consistant simultanément à déclencher l'ouverture desdits moyens d'alimentation et à actionner des moyens de temporisation de l'ouverture desdits moyens de transfert, lesdits moyens de temporisation déclenchant l'ouverture desdits moyens de transfert à l'expiration d'un premier intervalle de temps prédéterminé, supérieur à l'intervalle de temps nécessaire pour déverser le contenu dudit sas intermédiaire (20) dans ladite électrode, et déclenchant la fermeture desdits moyens de transfert au bout d'un second intervalle de temps prédéterminé, permettant le remplissage dudit sas intermédiaire (20) par déversement d'une partie du contenu du réservoir (14).

10. Procédé de commande selon la revendication 9, caractérisé en ce que la fermeture desdits moyens de transfert est déclenchée par une détection de niveau de remplissage dudit sas intermédiaire (20).

11. Générateur électrochimique selon l'une quelconque des revendications 5 à 7, caractérisé en ce qu'il comporte des moyens de temporisation du déclenchement de l'ouverture et de la fermeture des moyens de transfert permettant le remplissage dudit sas intermédiaire (20) par déversement d'une partie du contenu du réservoir (14), lesdits moyens de temporisation déclenchant lesdits moyens de transfert une fois que les moyens d'alimentation ont déversé le contenu en matériau électro-actif dudit sas intermédiaire dans l'électrode rechargeable.

12. Générateur électrochimique selon la revendication 11, caractérisé en ce qu'il comporte, en relation fonctionnelle avec lesdits moyens de mesure de la différence de potentiel entre lesdites deux sondes, une unité logique de commande (25) comprenant, d'une part, des moyens de comparaison de ladite différence de potentiel par rapport à un seuil minimal et éventuellement un seuil maximal prédéterminés, et d'autre part, des moyens de commande des moyens d'alimentation de ladite électrode en matériau électro-actif déclenchés par lesdits moyens de comparaison.

13. Générateur électrochimique selon la revendication 12, caractérisé en ce que lesdits moyens de mesure comportent une première sonde électrique (26) placée dans ladite pochette (12) limitant l'électrode rechargeable et reliée par un premier conducteur électrique isolé (28) à ladite unité logique de commande (25), et une seconde sonde électrique (27) plongée dans l'électrolyte (9), de préférence placée elle aussi dans la pochette à côté de la première et reliée par un deuxième conducteur électrique isolé (29) à ladite unité logique de commande (25).

14. Générateur électrochimique selon l'une quelconque des revendications 12 à 13, caractérisé en ce qu'il comporte des moyens de temporisation (36) de l'ouverture desdits moyens de transfert du sas intermédiaire, lesdits moyens de temporisation (36) étant déclenchés par ladite unité logique de commande (25).

15. Générateur électrochimique selon la revendication 14, caractérisé en ce que les moyens de temporisation (36) sont dimensionnés de sorte à permettre l'ouverture desdits moyens de transfert (19,24,35), une fois fermés lesdits moyens d'alimentation (18,23,34), et à permettre la fermeture desdits moyens de transfert (19,24,35) au bout du second intervalle de temps nécessaire au remplissage dudit sas intermédiaire (20).

16. Générateur électrochimique selon l'une quelconque des revendications 11 à 15, caractérisé en ce qu'il comporte au moins un premier organe obturateur (18,39), de type boisseau ou glissière, propre à permettre périodiquement la mise en communication d'une structure collectrice de ladite électrode avec ledit réservoir de particules électro-actives devant alimenter ladite structure.

17. Générateur électrochimique selon la revendication 16, caractérisé en ce que ledit premier obturateur (39) est constitué par un boisseau cylindrique dans lequel sont ménagés diamétralement des trous permettant le passage desdites particules électro-actives, lesdits trous ayant de préférence une section allongée dans l'axe du boisseau.

18. Générateur électrochimique selon l'une quelconque des revendications 11 à 17, caractérisé en ce qu'il comporte un second obturateur (19,40), de type boisseau ou glissière, propre à permettre périodiquement la mise en communication dudit sas intermédiaire (20) avec ledit volume supérieur du réservoir (14), ledit sas intermédiaire (20) étant ainsi limité par lesdits premier et second obturateurs.

19. Générateur électrochimique selon l'une quelconque des revendications 11 à 17, caractérisé en ce qu'il comporte un second obturateur constitué de deux cylindres (44,45) parallèles distants l'un de l'autre d'un écartement (e) légèrement inférieur à la taille des particules solides contenues dans le réservoir (14) et propres à être mus en rotation autour de leur axe respectif de sorte à entraîner les particules solides vers ledit sas intermédiaire (20).

20. Générateur électrochimique selon la revendication 19, caractérisé en ce que lesdits cylindres (44,45) comportent sur leur périphérie une épaisseur (46,47) en un matériau souple propre à être légèrement écrasé élastiquement au passage de particules.

21. Générateur électrochimique selon l'une quelconque des revendications 11 à 20, caractérisé en ce que le volume supérieur du réservoir (14) présente perpendiculairement à l'axe des moyens de transfert, une section décroissante en marche d'escalier au fur et à mesure qu'elle est plus proche desdits moyens de transfert.

22. Générateur électrochimique selon l'une quelconque des revendications 11 à 21, caractérisé en ce qu'il comporte au moins une électrode rechargeable à structure alvéolaire réceptrice de particules de matière électro-active, formant une pochette ménageant en elle-même des canaux de zones actives propres à être remplis en matériau électo-actif, séparés les uns des autres par des zones inactives.

23. Générateur électrochimique selon l'une quelconque des revendications 11 à 21, caractérisé en ce qu'il comporte au moins une électrode rechargeable délimitée par une pochette à canaux de zones actives propres à être remplis en matériau électro-actif, séparés les uns des autres par des zones inactives.

24. Générateur électrochimique selon l'une quelconque des revendications 11 à 21, caractérisé en ce que ladite pochette, le cas échéant seulement en ses canaux de zones actives selon la revendication 22 ou 23, est dimensionnée en épaisseur de sorte à pouvoir recevoir initialement entre 1 et 3 particules de matériau électro-actif et en ce que ces particules ont une dimension comprise entre 1 et 5 mm.

25. Générateur électrochimique selon la revendication 22 ou 23 et 24, caractérisé en ce que le pas de répétition des zones actives et inactives est inférieur à 4 fois la largeur des canaux définissant les zones actives, ou au plus égal à cette valeur.

26. Générateur électrochimique selon les revendications 22 ou 23 à 25, caractérisé en ce que chaque zone inactive joignant deux zones actives occupées par des canaux, présente parallèlement à chacune des faces opposées de la pochette, une largeur au moins égale à 1,5 fois et au plus à 5 fois la distance qui, dans le générateur, sépare lesdites zones d'une surface d'électrode de polarité opposée en vis-à-vis, cette largeur étant de préférence au moins égale au diamètre d'une particule de matériau électro-actif.

27. Générateur électrochimique selon l'une quelconque des revendications 22 à 26 caractérisé en ce que à chaque canal sont associés une première et une seconde sondes et en ce que l'unité logique de commande comporte des moyens propres à comparer la différence de potentiel apparaissant entre les deux sondes d'un même canal par rapport à un seuil minimal et un seuil maximal prédéterminés.

## Patentansprüche

1. Elektrochemisches Umwandlungsverfahren unter Verwendung eines elektrochemischen Generators mit nachladbarer Elektrode aus verbrauchbarem elektroaktivem Material in fester, zerteilter Form, das aus einem dem Generator zugeordneten Behälter (14) ausgetragen wird, um eine die genannte Elektrode begrenzende Tasche (12) zu versorgen, bei dem man die Speisung der genannten Tasche (12) mit elektroaktivem Material in Abhängigkeit von der Messung einer Potentialveränderung steuert, dadurch gekennzeichnet, daß die genannte Potentialveränderung lokal im Inneren der Tasche (12) nachgewiesen wird, indem man die Potentialdifferenz mißt, die im Betrieb zwischen zwei Sonden (26, 27) auftritt, von denen mindestens eine erste in der Tasche (12) in unmittelbarer Nähe zu dem elektroaktiven Material angeordnet ist und von denen eine zweite permanent mit einem Elektrolyten (9) in Berührung steht, in welchen die Elektrode eintaucht, und nicht mit dem elektroaktiven Material in Berührung steht.

2. Elektrochemisches Umwandlungsverfahren nach Anspruch 1, dadurch gekennzeichnet, daß die zweite Sonde ihrerseits in der Tasche angebracht ist, vorzugsweise neben der ersten, und daß sie mit einer von Löchern durchsetzten isolierenden Hülle, vorzugsweise aus PVC oder mit einer mikroporösen Membran ummantelt ist.

3. Elektrochemisches Umwandlungsverfahren nach Anspruch 1 oder 2, dadurch gekennzeichnet, daß die in dem Behälter (14) enthaltenen festen Partikel aus verbrauchbarem elektroaktivem Material sich dort durch Schwerkraft absetzen.

4. Elektrochemisches Umwandlungsverfahren nach einem der Ansprüche 1 bis 3, dadurch gekennzeichnet, daß das elektroaktive Material durch Partikel, Körner oder Zylinder gebildet wird.

5. Elektrochemischer Generator mit nachladbarer Elektrode aus verbrauchbarem elektroaktivem Material, dadurch gekennzeichnet, daß sie Mittel zur Speisung einer die Elektrode in dem Generator begrenzenden Tasche (12) mit elektroaktivem Material, das aus einem dem Generator zugeordneten Behälter (14) ausgetragen wird, Mittel zur Messung einer Potentialdifferenz zwischen einer in der Tasche (12) angeordneten ersten Sonde und einer zweiten Sonde, die so positioniert ist, daß sie permanent mit einem Elektrolyten (9), in welchen die Elektrode eintaucht, in Berührung steht, ohne mit dem elektroaktiven Material in Berührung zu stehen, und Mittel zur Steuerung der Speisemittel aufweist, um die Speisemittel automatisch in Abhängigkeit von einer Änderung der von den genannten Meßmitteln nachgewiesenen Potentialdifferenz zu aktivieren.

6. Elektrochemischer Generator nach Anspruch 5, dadurch gekennzeichnet, daß der Behälter (14) für das verbrauchbare elektroaktive Material eine Zwischenschleuse (20) aufweist, die ein oberes Volumen des Behälters (14) von den Speisemitteln für das elektroaktive Elektrodenmaterial trennt.

7. Elektrochemischer Generator nach Anspruch 6, dadurch gekennzeichnet, daß er Mittel zum Überführen von Partikeln des elektroaktiven Materials von dem genannten oberen Volumen zu der Zwischenschleuse (20) aufweist.

8. Verfahren zur Steuerung der Speisung einer nachladbaren Elektrode für einen elektrochemischen Generator nach einem der Ansprüche 5 bis 7 mit elektroaktivem Material, dadurch gekennzeichnet, daß es die folgenden Schritte aufweist:
- Messen der Potentialdifferenz zwischen den genannten ersten und zweiten Sonden (26, 27),
- Auslösen der Öffnung der Speisemittel für das elektroaktive Material der Elektrode, sobald die genannte Potentialdifferenz unter einen vorgegebenen Minimalwert absinkt,
- Auslösen des Schließens der Speisemittel, sobald die genannte Potentialdifferenz über einen vorgegebenen Maximalwert ansteigt.

9. Steuerverfahren nach Anspruch 8, dadurch gekennzeichnet, daß es die folgenden Schritte aufweist, bestehend aus Auslösen der Öffnung der Speisemittel und gleichzeitigem Betätigen von Verzögerungsmitteln für die Öffnung der genannten Überführungsmittel, welche Verzögerungsmittel die Öffnung der Überführungsmittel bei Ablauf eines vorgegebenen ersten Zeitintervalls auslösen, das größer ist als das Zeitintervall, das zum Entleeren des Inhalts der Zwischenschleuse (20) in die Elektrode benötigt wird, und das Schließen der Überführungsmittel am Ende eines zweiten vorgegebenen Zeitintervalls auslösen, daß das Nachfüllen der Zwischenschleuse (20) durch Ablassen eines Teils des Inhalts des Behälters (14) gestattet.

10. Steuerverfahren nach Anspruch 9, dadurch gekennzeichnet, daß das Schließen der Überführungsmittel durch eine Erfassung des Füllstands der Zwischenschleuse (20) ausgelöst wird.

11. Elektrochemischer Generator nach einem der Ansprüche 5 bis 7, dadurch gekennzeichnet, er Mittel zur Verzögerung der Auslösung der Öffnung und des Schließens der Überführungsmittel aufweist, die das Nachfüllen der Zwischenschleuse (20) durch Ablassen eines Teils des Inhalts des Behälters (14) ermöglichen, welche Verzögerungsmittel die Überführungsmittel auslösen, wenn die Speisemittel einmal den Inhalt an elektroaktivem Material aus der Zwischenschleuse in die nachladbare Elektrode entleert haben.

12. Elektrochemischer Generator nach Anspruch 11, dadurch gekennzeichnet, daß er in funktionellem Zusammenhang mit den Mitteln zur Messung der Potentialdifferenz zwischen den genannten beiden Elektroden eine logische Steuereinheit (25) aufweist, die einerseits Mittel zum Vergleich der Potentialdifferenz mit einem vorgegebenen Minimalwert und ggf. einem vorgegebenen Maximalwert und andererseits Steuermittel aufweist, die durch die genannten Vergleichsmittel ausgelöst werden und die Mittel zur Speisung der Elektrode mit elektroaktivem Material ansteuern.

13. Elektrochemischer Generator nach Anspruch 12, dadurch gekennzeichnet, daß die Meßmittel eine erste elektrische Sonde (26), die in der die nachladbare Elektrode begrenzenden Tasche (12) angeordnet ist und durch einen isolierten ersten elektrischen Leiter (28) mit der logischen Steuereinheit (25) verbunden ist, und eine zweite elektrische Sonde (27) aufweisen, die in den Elektrolyten (9) eintaucht und vorzugsweise ebenfalls in der Tasche neben der ersten Elektrode angeordnet ist und durch einen zweiten isolierten elektrischen Leiter (29) mit der logischen Steuereinheit (25) verbunden ist.

14. Elektrochemischer Generator nach einem der Ansprüche 12 bis 13, dadurch gekennzeichnet, daß er Mittel (36) zur Verzögerung der Öffnung der Überführungsmittel zu der Zwischenschleuse aufweist, welche Verzögerungsmittel (36) durch die logische Steuereinheit (25) ausgelöst werden.

15. Elektrochemischer Generator nach Anspruch 14, dadurch gekennzeichnet, daß die Verzögerungsmittel (36) so ausgelegt sind, daß sie das Öffnen der Überführungsmittel (19, 24, 35) gestatten, wenn die Speisemittel (18, 23, 34) einmal geschlossen sind, und das Schließen der genannten Überführungsmittel (19, 24, 35) am Ende eines zweiten Zeitintervalls gestatten, das zum Nachfüllen der Zwischenschleuse (20) benötigt wird,

16. Elektrochemischer Generator nach einem der Ansprüche 11 bis 15, dadurch gekennzeichnet, daß er wenigstens ein erstes Sperrorgan (18, 39) von der Art eines Kükens oder Schiebers aufweist, das geeignet ist, eine Sammelstruktur der Elektrode periodisch mit dem genannten Behälter für die elektroaktiven Partikel vor der Speisung der genannten Struktur zu verbinden.

17. Elektrochemischer Generator nach Anspruch 16, dadurch gekennzeichnet, daß das erste Sperrglied (39) durch ein zylindrisches Küken gebildet wird, in dem diametral Löcher ausgebildet sind, die den Durchtritt der elektroaktiven Partikel gestatten, welche Löcher vorzugsweise einen in Richtung der Achse des Kükens langgestreckten Querschnitt besitzen.

18. Elektrochemischer Generator nach einem der Ansprüche 11 bis 17, dadurch gekennzeichnet, daß er ein zweites Sperrglied (19, 40) von der Art eines Kükens oder Schiebers aufweist, das geeignet ist, die Zwischenschleuse (20) periodisch mit dem oberen Volumen des Behälters (14) zu verbinden, wobei die Zwischenschleuse (20) somit durch die genannten ersten und zweiten Sperrglieder begrenzt wird.

19. Elektrochemischer Generator nach einem der Ansprüche 11 bis 17, dadurch gekennzeichnet, daß er ein zweites Sperrglied aufweist, das durch zwei parallele Zylinder (44, 45) gebildet wird, die durch einen Spalt (e) zueinander beabstandet sind, der etwas kleiner ist als die Größe der in dem Behälter (14) enthaltenen festen Partikel, und die um ihre jeweiligen Achsen drehantreibbar sind, so daß sie die festen Partikel zu der Zwischenschleuse (20) transportieren.

20. Elektrochemischer Generator nach Anspruch 19, dadurch gekennzeichnet, daß die Zylinder (44, 45) an ihrem Umfang eine Schicht (46, 47) aus einem welchen Material aufweisen, das beim Durchtritt der Partikel etwas elastisch eingedrückt werden kann.

21. Elektrochemischer Generator nach einem der Ansprüche 11 bis 20, dadurch gekennzeichnet, daß das obere Volumen des Behälters (14) senkrecht zur Achse der Überführungsmittel einen treppenförmig in Richtung auf die Überführungsmittel abnehmenden Querschnitt aufweist.

22. Elektrochemischer Generator nach einem der Ansprüche 11 bis 21, dadurch gekennzeichnet, daß er wenigstens eine nachladbare Elektrode mit Zellenstruktur zur Aufnahme von Partikeln aus elektroaktivem Material aufweist, die eine Tasche bildet, in der Kanäle als die eigentlichen aktiven Zonen ausgebildet sind, die mit elektroaktivem Material gefüllt werden können und die voneinander durch inaktive Zonen getrennt sind.

23. Elektrochemischer Generator nach einem der Ansprüche 11 bis 21, dadurch gekennzeichnet, daß er wenigstens eine nachladbare Elektrode aufweist, die durch eine Tasche begrenzt wird, die Kanäle als eigentliche aktive Zonen zur Füllung mit elektroaktivem Material bildet, die voneinander durch inaktive Zonen getrennt sind.

24. Elektrochemischer Generator nach einem der Ansprüche 11 bis 21, dadurch gekennzeichnet, daß die Tasche, ggf. nur in ihren als aktive Zonen dienenden Kanälen nach Anspruch 22 oder 23, in der Dicke so dimensioniert ist, daß sie anfänglich zwischen ein und drei Partikel aus elektroaktivem Material aufnehmen kann, und daß diese Partikel eine Größe zwischen 1 und 5 mm haben.

25. Elektrochemischer Generator nach Anspruch 22 oder 23 und 24, dadurch gekennzeichnet, daß das Wiederholungsraster der aktiven und inaktiven Zonen kleiner oder höchstens gleich dem 4-fachen der Breite der Kanäle ist, die diese aktiven Zonen bilden.

26. Elektrochemischer Generator nach den Ansprüchen 22 oder 23 bis 25, dadurch gekennzeichnet, daß jede inaktive Zone, die zwei von Kanälen eingenommene aktive Zonen verbindet, parallel zu Jeder der gegenüberliegenden Flächen der Tasche eine Breite aufweist, die mindestens das 1,5-fachen und höchstens das 5-fache des Abstands beträgt, der in dem Generator die genannten Zonen von einer gegenüberliegenden Elektrodenoberfläche mit entgegengesetzter Polarität trennt, wobei diese Breite vorzugsweise wenigstens gleich dem Durchmesser eines Partikels aus elektroaktivem Material ist.

27. Elektrochemischer Generator nach einem der Ansprüche 22 bis 26, dadurch gekennzeichnet, daß Jedem Kanal eine erste und eine zweite Sonde zugeordnet sind und daß die logische Steuereinheit Jeweils eigene Vergleichsmittel zum Vergleich der zwischen den beiden Sonden desselben Kanals auftretenden Potentialdifferenz mit einem vorgegebenen Minimalwert und einem vorgegebenen Maximalwert aufweist.

## Claims

1. Process for electrochemical conversion using an electrochemical generator with rechargeable electrode of consumable electroactive material, in solid divided form, taken from a reservoir (14) associated with the said generator to supply a pocket (12) limiting the said electrode, following which the supply of the said pocket (12) with electroactive material is controlled as a function of a detection of a variation in potential, characterised in that the said variation in potential is detected locally inside the said pocket (12) by measuring the potential difference occurring during operation between two probes (26, 27) of which at least the first is placed in the said pocket (12) in the immediate vicinity of the electroactive material, and of which the second is permanently in contact with an electrolyte (9) in which the said electrode is immersed, and not in contact with the electroactive material.

2. Process of electrochemical conversion according to Claim 1, characterised in that the second probe is also placed in the pocket preferably next to the first, and in that it is covered either with a perforated insulating sheath preferably of PVC or a microporous wall.

3. Electrochemical conversion process according to Claim 1 or 2, characterised in that the solid particles of the consumable electroactive material contained in the said reservoir (14) are compressed under gravity.

4. Electrochemical conversion process according to any of Claims 1 to 3, characterised in that the said electroactive material consists of particles, granules or cylinders.

5. Electrochemical generator with rechargeable electrode of consumable electroactive material, characterised in that it comprises the means of supply of a pocket (12), limiting the said electrode in the generator, with electroactive material taken from a reservoir (14) associated with the generator, means for measuring a potential difference occurring between a first probe placed in the said pocket (12) and a second probe placed permanently in contact with an electrolyte (9) in which the said electrode is immersed, without being in contact with the electroactive material, and means of control of the said means of supply to trip automatically the said means of supply as a function of a variation in the potential difference detected by the said means of measurement.

6. Electrochemical generator according to Claim 5, characterised in that the said reservoir (14) of consumable electroactive material comprises an intermediate lock (20) separating a greater volume of the said reservoir (14) from the means of supply of electroactive material of the said electrode.

7. Electrochemical generator according to Claim 6, characterised in that it comprises means of transfer of particles of electroactive material from the said greater volume to the said intermediate lock (20).

8. Process for controlling the supply of electroactive material to a rechargeable electrode for an electrochemical generator according to any of Claims 5 to 7, characterised in that it comprises the following stages consisting of:
- measuring the potential difference between the said first and second probes (26, 27);
- tripping the opening of the means of supply of electroactive material to the said electrode as soon as the said potential difference falls below a predetermined minimum threshold;
- tripping the closure of the said means of supply as soon as the said potential difference exceeds a predetermined maximum threshold.

9. Control process according to Claim 8, characterised in that it comprises the following stages consisting simultaneously of tripping the opening of the said means of supply and activating the means of delay of opening of the said means of transfer, the said means of delay tripping the opening of the said means of transfer on expiry of a first predetermined time interval greater than the time interval necessary to transfer the contents of the said intermediate lock (20) to the said electrode, and tripping the closure of the said means of transfer at the end of a second predetermined time interval allowing the filling of the said intermediate lock (20) by transfer of part of the contents of the reservoir (14).

10. Control process according to Claim 9, characterised in that the closure of the said means of transfer is tripped by detection of the filling level of the said intermediate lock (20).

11. Electrochemical generator according to any of Claims 5 to 7, characterised in that it comprises means of delaying the tripping of the opening and closure of the means of transfer allowing filling of the said intermediate lock (20) by transfer of part of the contents of the reservoir (14), the said means of delay tripping the said means of transfer once the means of supply have transferred the content of electroactive material of the said intermediate lock to the rechargeable electrode.

12. Electrochemical generator according to Claim 11, characterised in that it comprises, in a functional relation with the said means of measurement of the potential difference between the said two probes, a logic control unit (25) comprising firstly means of comparison of the said potential difference in relation to a predetermined minimum threshold and where applicable a maximum threshold, and secondly means of control of the means of supply of the said electrode with electroactive material tripped by the said means of comparison.

13. Electrochemical generator according to Claim 12, characterised in that the said means of measurement comprise a first electrical probe (26) placed in the said pocket (12) limiting the rechargeable electrode and linked by a first insulated electrical conductor (28) to the said logic control unit (25), and a second electrical probe (27) immersed in the electrolyte (9), preferably also placed in the pocket next to the first and linked by a second insulated electrical conductor (29) to the said logic control unit (25).

14. Electrochemical generator according to any of Claims 12 to 13, characterised in that it comprises means of delay (36) of the opening of the said means of transfer from the intermediate lock, the said means of delay (36) being tripped by the said logic control unit (25).

15. Electrochemical generator according to Claim 14, characterised in that the means of delay (36) are dimensioned so as to allow opening of the said means of transfer (19, 24, 35) once the said means of supply (18, 23, 34) have closed, and allowing the closure of the said means of transfer (19, 24, 35) at the end of a second time interval necessary for filling the said intermediate lock (20).

16. Electrochemical generator according to any of Claims 11 to 15, characterised in that it comprises at least a first sealing element (18, 39) of the block or slider type able to allow periodically the communication of a collector structure of the said electrode with the said reservoir of electroactive particles to supply said structure.

17. Electrochemical generator according to Claim 16, characterised in that the first seal (39) consists of a cylindrical block in which are arranged diametrically opposed holes allowing passage of the said electroactive particles, the said holes preferably having a section elongated in the axis of the block.

18. Electrochemical generator according to any of Claims 11 to 17, characterised in that it comprises a second seal (19, 40) of the block or slider type able to allow periodically the communication between the said intermediate lock (20) and the said greater volume of the reservoir (14), the said intermediate lock (20) thus being limited by the said first and second seals.

19. Electrochemical generator according to any of Claims 11 to 17, characterised in that it comprises a second seal consisting of two cylinders (44, 45), parallel and separated from each other by a gap (e) slightly less than the size of the solid particles contained in the reservoir (14) and able to be rotated about their axes so as to propel the solid particles towards the said intermediate lock (20).

20. Electrochemical generator according to Claim 19, characterised in that the said cylinders (44, 45) comprise on their periphery a thickness (46, 47) of a flexible material able to be crushed slightly elastically on passage of the particles.

21. Electrochemical generator according to any of Claims 11 to 20, characterised in that the greater volume of the reservoir (14) has, perpendicular to the axis of the means of transfer, a section decreasing in step form as it approaches the said means of transfer.

22. Electrochemical generator according to any of claims 11 to 21, characterised in that it comprises at least one rechargeable electrode of alveolar structure to receive particles of electroactive material, forming a pocket which itself consists of channels of active zones able to be filled with electroactive material, separated from each other by inactive zones.

23. Electrochemical generator according to any of Claims 11 to 21, characterised in that it comprises at least one rechargeable electrode limited by a pocket with channels of active zones able to be filled with electroactive material and separated from each other by inactive zones.

24. Electrochemical generator according to any of Claims 11 to 21, characterised in that the said pocket, where applicable only in its channels of active zones according to Claim 22 or 23, is dimensioned in thickness so as to be able to receive initially between 1 and 3 particles of electroactive material and in that these particles have a dimension of between 1 and 5 mm.

25. Electrochemical generator according to Claims 22 or 23 and 24, characterised in that the repetition pitch of the active and inactive zones is less than 4 times the width of the channels defining the active zones or at most equal to this value.

26. Electrochemical generator according to Claims 22 or 23 to 25, characterised in that each inactive zone joining two active zones occupied by channels has, parallel to each opposite face of the pocket, a width at least equal to 1.5 times and at most 5 times the distance which, in the generator, separates the said zones from an electrode surface of opposite polarity located opposite, this width being preferably at least equal to the diameter of a particle of electroactive material.

27. Electrochemical generator according to any of Claims 22 to 26, characterised in that each channel is associated with a first and a second probe and in that the logic control unit comprises means able to compare the potential difference occurring between two probes of the same channel in relation to a predetermined minimum threshold and a maximum threshold.
